Europäisches Patentamt

European Patent Office

Office européen des brevets

(19)

(11) Veröffentlichungsnummer: **0 110 198 B1**

(12) # EUROPÄISCHE PATENTSCHRIFT

(45) Veröffentlichungstag der Patentschrift:
26.02.86

(51) Int. Cl.⁴: **C 08 G 59/22**

(21) Anmeldenummer: 83111090.3

(22) Anmeldetag: 07.11.83

(54) Mischungen spezieller cycloaliphatischer 1,2-Diepoxide und ihre Verwendung.

(30) Priorität: 19.11.82 DE 3242711

(43) Veröffentlichungstag der Anmeldung:
13.06.84 Patentblatt 84/24

(45) Bekanntmachung des Hinweises auf die Patenterteilung:
26.02.86 Patentblatt 86/9

(84) Benannte Vertragsstaaten:
CH DE FR GB IT LI NL

(56) Entgegenhaltungen:
DE - A - 2 229 907
DE - A - 2 315 500
DE - B - 1 198 069
US - A - 3 579 473

(73) Patentinhaber: BAYER AG, Konzernverwaltung RP
Patentabteilung, D-5090 Leverkusen 1 Bayerwerk (DE)

(72) Erfinder: Kleiner, Frank, Dr., Am Sonnenhang 62,
D-5090 Leverkusen 3 (DE)
Erfinder: Kubens, Rolf, Dr., Carl-Leverkus-Strasse 1,
D-5068 Odenthal (DE)
Erfinder: Heine, Heinrich, Müritzstrasse 38,
D-5090 Leverkusen 1 (DE)

## 0 110 198

**Beschreibung**

Die Erfindung betrifft eine Mischung aus 60-95 Gew.-% eines Diglycidylesters der Hexahydrophthalsäuren und 5-40 Gew.-% 3,4-Epoxycyclohexylmethyl-3,4-epoxycyclo-hexan-carboxylat. In Kombination mit üblichen polycarbonsäureanhydriden als Härter wird diese Mischung zur Herstellung von Formkörpern mit vorzüglicher Witterungsbeständigkeit sowie guten mechanischen und elektrischen Eigenschaften eingesetzt.

3,4-Epoxycyclohexylmethyl-3,4-epoxycyclohexan-carboxylat ist bekannt (vgl. GB-A- 768 157, Beispiel IV). Gehhärtet mit üblichen polycarbonsäureanhydriden, erhält man Formkörper, die zwar eine ausgezeichnete Wärmeformbeständigkeit und gute elektrische Eigenschaften aufweisen, die aber sonst sehr spröde sind und im Vergleich zu Standardepoxidharzen auf Basis von Bisphenol A nur eine Biegefestigkeit von ca. 60 % und eine Schlagzähigkeit von ca. 40 % aufweisen. Außerdem zeigen diese Harz-Härter-Mischungen ein weit ungünstigeres Härtungsverhalten als Standard-Epoxid-Harze. Die An- und Aushärtezeiten sind wesentlich länger, das Material ist mit den modernen Verarbeitungsverfahren, z.B. im Spritzgießverfahren, praktisch nicht verarbeitbar.

Es ist ferner bekannt, cycloaliphatische 1,2-Diepoxide mit cycloaliphatischen oder aliphatischen polycarbonsäureanhydriden unter Formgebung zu härten und die Härtungsprodukte wegen ihrer günstigen elektrischen Eigenschaften und ihrer Wetterbeständigkeit auf dem Freiluftsektor einzusetzen (vgl. US-A-3 511 922).

Es ist auch bekannt, Hexahydrophthalsäurediglycidylester herzustellen und mit üblichen Polycarbonsäureanhydriden zu härten (vgl. GB-A-1 058 075 und 1 060 016).

Dieses Epoxidharzsystem weist bei der Verarbeitung eine ganze Reihe von günstigen Eigenschaften auf (niedrige Viskosität, lange Verarbeitungszeit bei Raumtemperatur, kurze Härtezyklen bei höheren Temperaturen, gute mechanische und elektrische Eigenschaften, vorteilhafte Verarbeitbarkeit beim Spritzgießen) und ist auch ausgezeichnet beständig im Freilufteinsatz; als Nachteil für dieses System wird jedoch manchmal die gegenüber Standardepoxidharzformkörpern (hergestellt aus einem flüssigen Epoxidharz aus Bisphenol A und Epichlorhydrin und einem Säureanhydrid als Härter) niedrigere Wärmeformbeständigkeit genannt.

Aufgabe der Erfindung ist es nun, die vorteilhaften Verarbeitungseigenschaften des Systems Hexahydrophthalsäurediglycidylester / übliche polycarbonsäureanhydride zu erhalten, ebenso die guten mechanischen Werte der ausgehärteten Formkörper dieses Systems auf gleichem Niveau zu halten, gleichzeitig aber die Wärmformbeständigkeit der ausgehärteten Formkörper dieses System deutlich zu erhöhen. So sollten sich im abgewandelten System die Viskosität praktisch nicht erhöhen und insbesondere die Härtetaktzeiten in Spritzgußvorrichtungen nicht verlängern. Die Biege- und Zugfestigkeitswerte sowie die Schlagzähigkeitswerte sollten praktisch unverändert bzw. auf gleichem Niveau bleiben oder, wenn möglich, sogar noch verbessert werden. Bei der Verbesserung der Wärmestandfestigkeit, ausgedrückt durch den Martensgrad, sollte eine Erhöhung bis zu ca. 30 bis 40°C erreicht werden.

Die Aufgabe der Erfindung wurde dadurch gelöst, daß für die Härtung mit üblichen polycarbonsäureanhydriden anstelle des Hexahydrophthalsäurediglycidylesters eine Mischung aus 60-95 Gew.-% Hexahydrophthalsäurediglycidylester (= Diepoxid A) und 5-40 Gew.-% 3,4-Epoxycyclohexyl-methyl-3,4-epoxvcyclohexan-carboxylat (= Diepoxid B) eingesetzt wurde.

Die Lösung der Aufgabe der Erfindung ist in mehrfacher Hinsicht überraschend.

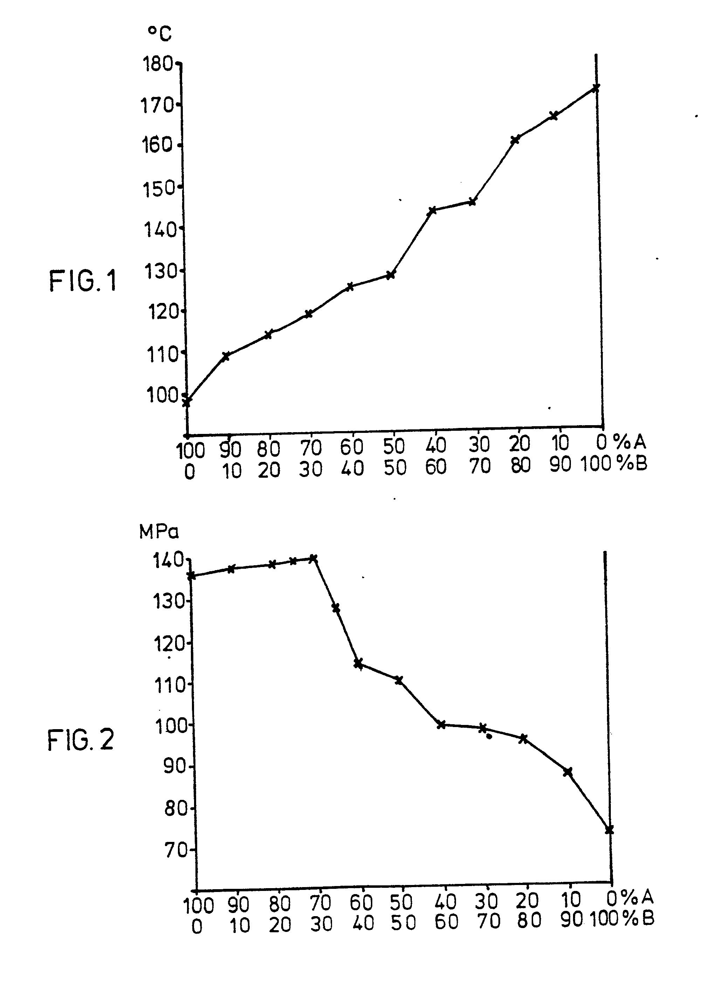

Da normalerweise bei Mischungen aus beispielsweise zwei Diepoxidkomponenten A und B das Eigenschaftsniveau von A (100 %) im Maße der Erhöhung der Anteile von B und Herabsetzung der Anteile von A im wesentlichen proportional dem Eigenschaftsniveau von B (100 %) zustrebt (vgl. Fig. 1, Änderung der Wärmeformbeständigkeit), war es überraschend, daß die Gelierzeiten (vgl. Tabelle 1) eines Teils der Mischungen aus A und B sowie stets einem üblichen polycarbonsäureanhydrid und Beschleuniger - die Gelierzeiten von Diepoxid A und Härter sowie Beschleuniger sind auch bei unterschiedlichen Härtetemperaturen stets wesentlich kürzer als von entsprechenden Mischungen mit Diepoxid B - unterhalb der Werte von Diepoxid A und nicht zwischen den Werten von A und B liegen. Dies trifft selbst für eine Härtetemperatur von 160°C und Mischungen aus A und B mit bis zu 40 Gew.-% Anteil von B zu. Kurze Gelierzeiten entsprechen kurzen Härtetaktzeiten, die insbesondere beim Spritzgießen von Vorteil sind.

Weiter war nicht vorauszusehen, daß gehärtete Formkörper auf Basis von Mischungen aus Diepoxiden A und B (prozentualer Anteil von B bis zu 30 Gew.-%) sogar eine höhere Biegefestigkeit besitzen als Formkörper auf Basis von Diepoxid A ohne Gehalt an Diepoxid B (vgl. Fig. 2). Das gleiche trifft zu für die Zugfestigkeit (vgl. Fig. 3), und zwar für Mischungen aus den Diepoxiden A und B mit bis zu 25 Gew.-% Anteil an B. Ferner mußte erwartet werden, daß die Schlagzähigkeitswerte von Mischungen mit Diepoxiden A und B mit bis zu 30 Gew.-% Anteil an B wesentlich stärker abfallen (vgl. Figur 4), als es in der praxis der Fall ist.

Unter Berücksichtigung der Gelierzeiten und mechanischen Werte sollten praxisgerechte Epoxidmischungen bis zu 40 Gew.-% an Diepoxid B enthalten.

Gegenstand der Erfindung sind somit Mischungen aus

60 - 95 Gew.-%, vorzugsweise 70-95 Gew.-%, Diglycidylester der Hexahydrophthalsäuren und 5 - 40 Gew.-%, vorzugsweise 5-30 Gew.-%, 3,4-Epoxy-cyclohexylmethyl-3,4-epoxycyclohexan-carboxylat.

Die Diglycidylester der Hexahydrophthalsäuren, die auch technische Qualitäten umfassen, besitzen ein Epoxidäquivalent von 160 bis 200 und eine Viskosität bei 25°C von 300 bis 2500 mpas.

3,4-Epoxycyclohexylmethyl-3,4-epoxycyclohexan-carboxylat, das ebenfalls technische Qualitäten umfaßt, besitzt ein Epoxidäquivalent von 120 bis 180 und eine Viskosität bei 25°C von 300 bis 2000 mpas.

2

Unter Epoxidäquivalent wird die Gewichtsmenge Epoxidverbindung in Gramm verstanden, in der eine 1,2-Epoxidgruppe enthalten ist.

Gegenstand der Erfindung ist auch ein Verfahren zur Herstellung von Epoxidharzformkörpern durch Härten mindestens einer 1,2-Epoxidverbindung mit mehr als einer 1,2-Epoxid-gruppe pro Molekül mit 0,6-1,2 Anhydridäquivalenten eines üblichen polycarbonsäureanhydrids pro Epoxidäquivalent

bei Temperaturen von 60 bis 180°C, gegebenenfalls unter Überdruck und gegebenenfalls in Gegenwart eines üblichen Härtungsbeschleunigers, von Füllstoffen, Farbstoffen, pigmenten und Verstärkermaterialien, dadurch gekennzeichnet, daß als 1,2-Epoxidverbindung eine Mischung aus

60 - 95 Gew.-% Diglycidylester der Hexahydrophthalsäuren und

5 - 40 Gew.-% 3,4-Epoxycyclohexylmethyl-3,4-epoxy-cyclohexan-carboxylat

verwendet wird.

Unter üblichen polycarbonsäureanhydriden werden aromatische, aliphatische und cycloaliphatische polycarbonsäureanhydride oder deren Mischungen verstanden.

Beispiele seien genannt: phthalsäureanhydrid, Tetrahydrophthalsäureanhydrid, Hexachlorendomethylen-tetrahydrophthalsäureanhydrid, Endomethylen-tetrahydrophthalsäureanhydrid, Methyl-endomethylentetrahydrophthalsäureanhydrid, Hexahydrophthalsäureanhydrid, Methylhexahydrophthalsäureanhydrid, Bernsteinsäureanhydrid, Maleinsäureanhydrid, Dodecenylbernsteinsäureanhydrid, vorzugsweise flüssige bzw. niedrigschmelzende (F < 60°C), cycloaliphatische Dicarbonsäureanhydride. Besonders bevorzugt werden Hexahydrophthalsäureanhydrid und cis-3- und/oder 4-Methylhexahydrophthalsäureanhydrid.

Pro Epoxidäquivalent werden 0,6-1,2, vorzugsweise 0,9 bis 1,1 Anhydridäquivalente des polycarbonsäureanhydrids eingesetzt.

Als Beschleuniger für die Härtung können die üblicherweise verwendeten in Mengen von 0,1 bis 1,5 Gew.-%, bezogen auf Diepoxid-Härter/Mischung, eingesetzt werden. Bevorzugt werden tertiäre Amine, beispielsweise Dimethylbenzylamin.

Den härtbaren Mischungen aus Diepoxid, polycarbonsäureanhydrid und gegebenenfalls Beschleunigern können vor der Härtung Füllstoffe, Farbstoffe, pigmente, flammhemmende Stoffe, Formtrennmittel und/oder verstärkende Materialien in üblichen Mengen zugesetzt werden. Füllstoffe sind beispielsweise Quarzmehl, Aluminiumoxid, Aluminiumoxidhydrat, Calciumcarbonat, Calcium-Magnesium-Carbonat. Verstärkende Materialien sind beispielsweise Fasern, Fäden, Vliese, Gewebe aus Glas, polyester, Nylon, Polyacrylnitril, Seide, baumwolle und Kohlenstoffasern.

Die härtbaren Mischungen aus Diepoxid, polycarbonsäureanhydrid, gegebenenfalls Beschleunigern und Zusatzstoffen können als Gießharz, Spritzgießharz und Imprägnierharz verwendet werden.

Die gehärteten Formkörper finden vorzugsweise auf dem Elektroisoliergebiet Verwendung.

Die im experimentellen Teil angegebenen Teile und prozente beziehen sich auf das Gewicht, sofern nicht anders angegeben.

**Beispiel 1**

Für die Bestimmung der Gelierzeiten in Tabelle 1 sowie die Wärmeformbeständigkeit und die mechanischen Werte in den Figuren 1 bis 4 wird handelsüblicher Hexahydrophthalsäurediglycidylester (= Diepoxid A) mit einem Epoxidäquivalent von 160 und einer Viskosität von 900 mpas, gemessen bei 25°C, eingesetzt. Das verwendete handelsübliche 3,4-Epoxycyclohexylmethyl-3,4-epoxycyclohexan-car-boxylat (= Diepoxid B) besitzt ein Epoxidäquivalent von 160 und eine Viskosität von 600 mpas, gemessen bei 25°C. Als Härter wird handelsübliches, flüssiges Methylhexahydrophthalsäureanhydrid mit einem Anhydridäquivalentgewicht von 168 verwendet; Viskosität 40 mpas, gemessen bei 25°C. Pro Epoxidäquivalent des Diepoxids A bzw. B bzw. der Mischungen aus den Diepoxiden A und B werden 0,95 Anhydridäquivalente des Härters eingesetzt. Außerdem werden, bezogen auf Diepoxid A bzw. B und Härter bzw. den Mischungen aus Diepoxiden A und B und Härter, 1 % Dimethylbenzylamin als Härtungsbeschleuniger zugesetzt.

Aus Tabelle 1 sind die Gelierzeiten der Diepoxide A und B und ihrer Mischungen bei verschiedenen Temperaturen ersichtlich, stets abgemischt mit Härter und Beschleuniger, wie vorstehend angegeben.

Die Tests zeigen ein überraschendes Ergebnis. Es mußte erwartet werden, daß - ausgehend von den kürzeren Gelierzeiten der Ansätze mit Diepoxid A gegenüber Diepoxid B

bei den Mischungen aus Diepoxid A und B die Gelierzeitenproportional dem wachsenden Anteil B ansteigen, um die Werte der Ansätze mit Diepoxid B zu erreichen. Überraschenderweise liegen jedoch bei einem Teil der Abmischungen die Gelierzeiten unter denen der Ansätze mit 100 % an Diepoxid A.

## Tabelle 1

| % Diepoxide | | Gelierzeiten in Sekunden bei | | |
|---|---|---|---|---|
| A | B | 123°C | 140°C | 160°C |
| 100 | 0 | 600 | 200 | 86 |
| 90 | 10 | 485 | 130 | 60 |
| 80 | 20 | 470 | 127 | 68 |
| 70 | 30 | 360 | 123 | 71 |
| 60 | 40 | 315 | 165 | 75 |
| 50 | 50 | 415 | 170 | 88 |
| 40 | 60 | 420 | 200 | 95 |
| 30 | 70 | 425 | 210 | 114 |
| 20 | 80 | 577 | 340 | 147 |
| 10 | 90 | 811 | 415 | 230 |
| 0 | 100 | 900 | 900 | 760 |

Für die prüfung der Wärmebeständigkeit und der mechanischen Werte gemäß den Figuren 1 bis 4 wurden die Diepoxide A bzw. B bzw. die Mischungen aus den Diepoxiden A und B mit Härter und Beschleuniger in den Verhältnissen, wie eingangs angegeben, vermischt und 4 Stunden bei 80°C und an-schließend 16 Stunden bei 150°C gehärtet.

Figur 1 gibt die Wärmestandfestigkeiten nach Martens (ge-mäß DIN 53 458) in °C (Ordinate) der gehärteten probekörper in Abhängigkeit von Mischungen der Diepoxide A und B (Abszisse; Mischungsverhältnis von A und B in prozenten ausgedrückt) wieder. Ausgehend von einem Martensgrad von ca. 98°C für das reine Diepoxid A steigt der Martensgrad erwartungsgemäß im wesentlichen proportional dem wachsenden Anteil von Diepoxid B auf ca. 172°C, dem Wert für das reine Diepoxid B, an.

Figur 2 stellt die Änderung der Werte der Biegefestigkeit in Mpa der gehärteten probekörper, gemessen gemäß DIN 53 452, in Abhängigkeit von den Diepoxiden A und B und ihren Mischungen (Mischungsverhältnis in %) dar. Ausgehend von 100 % Diepoxid A liegen die Zahlenwerte der Biegefestigkeit für Mischungen aus A und B mit einem prozentualen Anteil von B bis ca. 30 % völlig Überraschend sogar noch etwas über denen des Diepoxids A. Erwartet werden mußte ein proportionales Abfallen der Biegefestigkeitswerte entsprechend dem steigenden prozentualen Anteil von B.

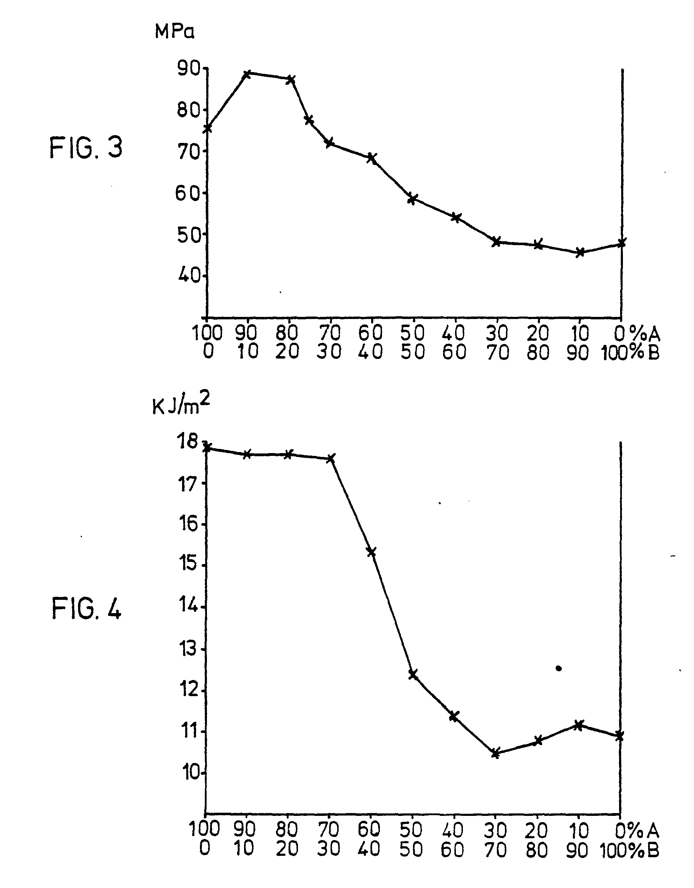

Figur 3 macht eine Aussage über die Zugfestigkeit (maximale Reißfestigkeit) der gehärteten probekörper in Mpa, gemessen gemäß DIN 53 455 in Abhängigkeit von Mischungen der Diepoxide A und B (Mischungsverhältnis in %). Überraschenderweise liegen die Zugfestigkeitswerte für Mischungen der Diepoxide A und B mit prozentualen Anteilen bis ca. 25 % an B über denen der Probekörper mit 100 % Diepoxid A.

Figur 4 zeigt die Änderung der Schlagzähigkeitswerte der gehärteten Probekörper in kJ/m$^2$, gemessen gemäß DIN 53 453 in Abhängigkeit von Mischungen der Diepoxide A und B (Mischungsverhältnis in %). Mischungen der Diepoxide A und B mit einem prozentualen Anteil bis zu 30 % B liefern Probekörper, die bezüglich der Schlagzähigkeit auf gleichem Niveau der Probekörper liegen, die nur mit reinem Diepoxid A hergestellt wurden. Erwartet werden mußte ein proportionales Abfallen der Werte, entsprechend dem wachsenden prozentualen Anteil von B.

**Patentansprüche**

1. Mischungen aus
60 - 95 Gew.-% Diglycidylester der Hexahydrophthalsäuren und
5 - 40 Gew.-% 3,4-Epoxycyclohexylmethyl-3,4-epoxycyclohexan-carboxylat.

2. Verfahren zur Herstellung von Epoxidharzformkörpern durch Härten mindestens einer 1,2-Epoxidverbindung mit mehr als einer 1,2-Epoxidgruppe pro Molekül mit 0,6-1,2 Anhydridäquivalenten eines üblichen

4

polycarbonsäureanhydrids pro Epoxidäquivalent bei Temperaturen von 60 bis 180°C, gegebenenfalls unter überdruck und gegebenenfalls in Gegenwart eines üblichen Härtungsbeschleunigers, von Füllstoffen, Farbstoffen, pigmenten und Verstärkermaterialien, dadurch gekennzeichnet, daß als 1,2-Epoxidverbindung eine Mischung aus

60 - 95 Gew.-% Diglycidylester der Hexahydrophthalsäuren und

5 - 40 Gew.-% 3,4-Epoxycyclohexylmethyl-3,4-epoxycyclohexan-carboxylat verwendet wird.

**Claims**

1. Mixtures of
60 - 95% by weight of diglycidyl esters of hexahydrophthalic acids and
5 - 40% by weight of 3,4-epoxycyclohexylmethyl-3,4-epoxycyclohexane carboxylate.

2. Process for the production of epoxide resin mouldings by hardening at least one 1,2-epoxide compound containing more than one 1,2-epoxide group per molecule with 0.6 - 1.2 anhydride equivalents of a customary polycarboxylic acid anhydride per epoxide equivalent at temperatures from 60 to 180°C, optionally under excess pressure and optionally in the presence of a customary hardening accelerator, fillers, dyes, pigments and reinforcing materials, characterised in that a mixture of

60 - 95% by weight of diglycidyl esters of hexahydrophthalic acids and

5 - 40% by weight 3,4-epoxycyclohexylmethyl-3,4-epoxycyclohexane carboxylate is used as the 1,2-epoxide compound.

**Revendication**

1. Mélanges de
60 à 95% en poids d'esters diglycidyliques des acides hexahydrophtaliques et
5 à 40% en poids de 3,4-époxycyclohexane-carboxylate de 3,4-époxycyclohexylméthyle. .

2. Procédé pour la fabrication de pièces moulées enrésines époxydiques par durcissement d'au moins un composé 1,2-epo-xydique contenant plus d'un groupe 1,2-époxyde par molécule avec 0,6-1,2 equivalent d'anhydride d'un anhydride d'acide polycarboxylique habituel par équivalent d'époxyde à des températures de 60 à 180°C, éventuellement sous pression et éventuellement en présence d'un accélérateur de durcissement habituel, de charges, colorants, pigments et matières de renforcement, caractérisé en ce que l'on utilise comme composé 1,2-époxydique un mélange de

60 à 95% en poids d'esters diglycidyliques des acides hexahydrophtaliques et

5 à 40% en poids de 3,4-époxycyclohexane-carboxylate de 3,4-époxycyclohexylméthyle.

°C

180
170
160
150
140
130
120
110
100

FIG.1

| 100 | 90 | 80 | 70 | 60 | 50 | 40 | 30 | 20 | 10 | 0 %A |
| 0 | 10 | 20 | 30 | 40 | 50 | 60 | 70 | 80 | 90 | 100 %B |

MPa

140
130
120
110
100
90
80
70

FIG. 2

| 100 | 90 | 80 | 70 | 60 | 50 | 40 | 30 | 20 | 10 | 0 %A |
| 0 | 10 | 20 | 30 | 40 | 50 | 60 | 70 | 80 | 90 | 100 %B |

1

MPa

FIG. 3

KJ/m²

FIG. 4